# EUROPEAN PATENT SPECIFICATION

(11) **EP 3 335 537 B1**
(45) Date of publication and mention of the grant of the patent: **11.09.2024**
(21) Application number: 17207124.3
(22) Date of filing: 13.12.2017
(51) Int. Cl.: A01C 23/00, A01M 7/00

(54) **MOBILE MANURE TANK DEVICE AND MOBILE MANURE SPREADER PROVIDED WITH A MANURE TANK DEVICE**
MOBILE MISTTANKVORRICHTUNG UND MOBILER MISTSTREUER MIT EINER MOBILEN MISTTANKVORRICHTUNG
DISPOSITIF DE CONTENEUR DE FUMIER MOBILE ET ÉPANDEUR DE FUMIER MOBILE AVEC UN DISPOSITIF DE CONTENEUR DE FUMIER MOBILE

(30) Priority: 13.12.2016 NL 2017987
(43) Date of publication of application: 20.06.2018
(73) Proprietor: Vredo Beheer B.V., 6669 DJ Dodewaard (NL)
(72) Inventor: de Vree, Johannes, 6669 DJ Dodewaard (NL)
(74) Representative: Bartelds, Erik

(56) References cited:
- EP-A1- 0 579 311
- WO-A1-2014/052888

## Description

The present invention relates to a mobile manure tank device, particularly a mobile manure tank device comprising a manure tank which is arranged on a mobile frame or which is configured to be arranged on a mobile frame. The present invention also relates to a mobile device for manuring comprising a mobile manure tank device according to the invention and a device for manuring.

Farmers use manure to promote better crop growth. A known method for manuring farmland or meadowland is applying manure or slurry onto or in the ground surface. Another known method for manuring farmland or meadowland is known as trailing shoe manuring, wherein a so-called trailing shoe is drawn through material present on the ground surface, such as grass, so that a strip of ground surface is cleared, and a strip of manure is arranged on the cleared ground surface. In an alternative method the strip of manure is not applied onto the ground, but introduced into the ground by first forming manure slits in the ground and introducing the manure into the formed manure slits. Such a method is known as slurry injecting, wherein a V-shaped manure slit is formed in the ground by means of coulter wheels positioned in a V-shape, into which slits manure is then introduced. Another form of such a method is known as slit coulter slurry injecting, wherein a manure slit is formed in the ground by means of a coulter, into which slit manure is then introduced.

For performing such manuring methods use is made of a mobile device for manuring which is moved over the farmland or meadowland to be manured and which applies manure onto or in the ground surface while being moved. Such a mobile device for manuring is usually arranged on a mobile frame which is advanced by means of a work vehicle, such as an agricultural tractor, or which is self-driving. Such a mobile device for manuring is generally fed with manure from a mobile manure tank which is moved over the land to be manured together with the mobile device for manuring. The mobile device for manuring and the mobile manure tank which feeds manure to the device for manuring are usually arranged on a shared mobile frame.

In order to reach the land to be manured it is usually necessary for the mobile device for manuring and the mobile manure tank to be moved on the public highway, whereby the permissible dimensions of the mobile device for manuring and the mobile manure tank, such as length, width and height, are limited. Particularly in the case of the manure tank this has the result that the quantity of manure which the manure tank can contain, and which is thus available to feed to the device for manuring during the forward movement over the land to be manured, is limited by the dimensions permissible on the public highway.

From EP 0 579 311 A1 a device for containing and supplying particulate material and fluid material is known. The device comprises a hopper for particulate material and a container for fluid material and a displaceable dividing wall located between both containers.

From WO 2014/052888 A1 a transportable storage tank for holding water is known. The storage tank has a lower tank that houses an upper tank for transport. The upper tank can be raised vertically at a job site by use of corner mounted pneumatic jacks. The upper and lower tanks are temporarily sealed together expanding the capacity of the lower tank without increasing the footbpring of the storage vessel. The storage tank can be transported along road ways when the upper tank is retracted into the lower tank.

The present invention has for its object, among others, to address the thus limited capacity of a mobile manure tank.

The present invention provides for this purpose a mobile manure tank device according to claim 1. The expandable manure tank is particularly configured to hold manure therein, at least in an expanded state thereof. It is possible by means of the expandable manure tank to temporarily increase the quantity of manure which the manure tank device is able to contain, i.e. the manure storage capacity of the manure tank device, by the quantity of manure which the expandable manure tank is able to contain in the expanded state thereof. In addition, the expandable manure tank provides the option of reducing dimensions of the expandable manure tank by bringing the expandable manure tank from the expanded state thereof into the non-expanded state. This makes it possible to temporarily reduce the dimensions of the mobile manure tank device by bringing the expandable manure tank from the expanded state into a non-expanded state. It is thus possible by means of the expandable manure tank to temporarily increase the manure storage capacity of the manure tank device, particularly by bringing the expandable manure tank into the expanded state, and to temporarily reduce the dimensions of the manure tank device, particularly by bringing the expandable manure tank into the non-expanded state. The expandable manure tank is preferably at least one of extendable, outward slidable, unfoldable.

The mobile manure tank device according to the invention is advantageous for feeding of a mobile device for manuring as described above. The mobile manure tank device according to the invention can be transported on the public highway to the land to be manured with the manure tank in the non-expanded state thereof, wherein the dimensions of the manure tank device comply with the permissible dimensions for transport on the public highway. The mobile manure tank device according to the invention can be moved over the land to be manured with the manure tank in the expanded state thereof, wherein the dimensions of the manure tank device can be greater than the permissible dimensions for transport on the public highway. Because the dimensions of the manure tank device with the manure tank in the expanded state thereof can be greater than the permissible dimensions for transport on the public highway, during forward movement over the land to be manured the manure storage capacity of the mobile manure tank device according to the invention can be greater than the manure storage capacity of a prior art mobile manure tank, the dimensions of which are limited by the permissible dimensions for transport on the public highway. Owing to the additional manure storage capacity provided by the manure tank in the expanded state it is possible to manure a larger ground surface area without interim filling of the manure tank device with manure. This produces a considerable time-saving. This is because topping up of manure during manuring takes time, particularly when it is necessary to drive from a location on the land to be manured where the manure tank device becomes depleted back to the starting location so as to top up manure, and then drive back to the location where manuring was suspended.

In a favourable embodiment of the manure tank device according to the invention the manure tank device also comprises a fixed, i.e. non-expandable, manure tank, particularly with fixed outer dimensions.

In this embodiment the manure tank device can have a total manure storage capacity which comprises the manure storage capacity of the fixed manure tank and the manure storage capacity of the expandable manure tank, and which is thereby greater in the expanded state of the expandable manure tank than in the non-expanded state.

In this embodiment the total manure storage capacity of the manure tank device alternatively or additionally comprises the manure storage capacity of the fixed manure tank and the additional manure storage capacity of the expandable manure tank. The outer dimensions of the fixed manure tank are preferably such that the outer dimensions of the manure tank device with the expandable manure tank in the non-expanded state are smaller than or equal to the permissible outer dimensions for transport on the public highway, while the outer dimensions of the manure tank device with the expandable manure tank in the expanded state are greater than the permissible dimensions for transport on the public highway. This enables the manure storage capacity of the fixed manure tank for transport of manure to the land to be manured already to be used during transport of the manure tank device on the public highway. At the land to be manured the manure tank device need only be filled up with a quantity of manure corresponding to the additional capacity provided by the expandable manure tank in the expanded state thereof.

The expandable manure tank is alternatively or additionally configured to already contain manure in the non-expanded state thereof. The expandable manure tank can for this purpose have an expandable part and a fixed, i.e. non-expandable, part. The outer dimensions of the fixed part are preferably such that the outer dimensions of the manure tank device with the expandable part of the expandable manure tank in the non-expanded state are smaller than or equal to the permissible outer dimensions for transport on the public highway, while the outer dimensions of the manure tank device with the expandable part of the expandable manure tank in the expanded state are greater than the permissible outer dimensions for transport on the public highway.

In a favourable embodiment of the manure tank device according to the invention with a fixed manure tank and an expandable manure tank, the expandable manure tank is arranged on the fixed manure tank. In a favourable embodiment thereof a wall of the expandable manure tank is arranged against a wall of the fixed manure tank. Alternatively, the expandable manure tank and the fixed manure tank share a wall.

In a favourable embodiment of the manure tank device according to the invention with a fixed manure tank and an expandable manure tank, the expandable manure tank is arranged on top of the fixed manure tank.

In a favourable embodiment of the mobile manure tank device according to the invention the inner space of the fixed manure tank and the inner space of the expandable manure tank are connected to each other for allowing passage of liquid by means of optionally closable connecting means. Because the two manure tanks are connected to each other for allowing passage of liquid, the manure can flow for instance from the fixed tank to the expandable tank during filling of one of the tanks. It is therefore only necessary to fill one of the tanks directly, since the other tank can be filled indirectly via the connecting means. In a practical form, the connecting means are for instance optionally closable passages between the two tanks.

In a favourable embodiment of the mobile manure tank device according to the invention with fixed manure tank and expandable manure tank the inner space of the fixed manure tank is connected to the inner space of the expandable manure tank. In an embodiment wherein a wall of the expandable manure tank is arranged against a wall of the fixed manure tank or wherein the expandable manure tank and the fixed manure tank share a wall the connection between the respective inner spaces can be realized in simple manner by means of a passage opening in the walls which are arranged against each other or the shared wall.

In a favourable embodiment of the manure tank device, in which it comprises a fixed manure tank and an expandable manure tank, the expandable manure tank comprises a manure bag configured to hold manure therein. The manure bag preferably has a flexible wall enclosing an inner space of the manure bag. Alternatively, the manure bag has a flexible wall arranged sealingly against a surface of a construction element of the manure tank device, so that the relevant surface and the flexible wall together enclose the inner space of the manure bag.

In a favourable embodiment a floating body, preferably an inflatable floating body, is arranged in the manure bag on a portion of the wall of the manure bag.

In a favourable embodiment the manure bag is provided with a vent. In a favourable embodiment thereof a floating body, preferably an inflatable floating body, is provided in the manure bag close to the vent. Instead of an inflatable floating body it is possible to use for instance a solid floating body, such as a floating body containing polystyrene foam.

In a preferred embodiment of the mobile manure tank device according to the invention with a fixed manure tank and with an expandable manure tank comprising a manure bag, the manure bag is arranged on top of an upper wall of the fixed manure tank. In a favourable embodiment thereof the inner space of the fixed manure tank and the inner space of the manure bag are connected to each other via at least one passage opening in the upper wall of the fixed manure tank. In a further favourable embodiment thereof a float arm of a manure level measuring device is arranged in the fixed manure tank, which arm can enter the inner space of the manure bag via the at least one passage opening. In a further favourable embodiment the manure tank device is provided with a manure overflow discharge comprising a discharge tube which extends in the inner space of the fixed manure tank, through the at least one passage opening and into the inner space of the manure bag, wherein a first end of the discharge tube is coupled to the wall of the manure bag and a second end of the discharge tube debouches out at a lower part of the fixed manure tank. The first end of the discharge tube preferably co-acts with a vent with which the manure bag is provided. The discharge tube is preferably a flexible tube or hose. The discharge tube is additionally or alternatively telescopic. The manure overflow discharge is optional.

In a favourable embodiment of the manure tank device according to the invention, the manure bag comprises a flexible wall and the manure tank device also comprises a collapsible and extendable skeleton which is configured to support the flexible wall of the manure bag. The skeleton can be an internal skeleton arranged in the manure bag. The skeleton is preferably an external skeleton which at least partially surrounds the manure bag. The manure bag is preferably arranged on a construction element of the manure tank device and the collapsible and extendable skeleton preferably comprises a number of skeleton segments which at a pivoting end thereof are arranged pivotally on the relevant construction element along the periphery of the manure bag. Each skeleton segment is preferably coupled at a free end thereof lying opposite the pivoting end to at least one of the other skeleton segments, particularly coupled to the free end of the at least one other skeleton segment. Two mutually opposite skeleton segments are preferably coupled in each case. The coupling is preferably realized by means of coupling members, particularly coupling rods, wherein the coupling members are preferably mutually connected to form a coupling construction which connects the free ends of the skeleton segments to each other. In order to facilitate the collapsing and extending of the skeleton segments the coupling members are preferably coupled movably to at least one of the skeleton segments with which the relevant coupling member is in engagement. The movable coupling is preferably embodied as sliding coupling, such as a telescopic coupling or a rail with carriage.

In a favourable embodiment the skeleton can be collapsed and extended by means of one or more actuators. In a favourable embodiment thereof at least a portion of the wall of the manure bag is connected to the skeleton, particularly so that when the skeleton is extended, the portion of the wall of the manure bag connected to the skeleton is erected. Connecting a portion of the wall of the manure bag to the skeleton is optional.

In a preferred embodiment of the manure tank device according to the invention it also comprises a mobile frame on which the expandable manure tank and, if provided, the fixed manure tank are arranged. The mobile frame is preferably configured as self-driving mobile frame, so that the mobile manure tank device is a self-driving vehicle. Alternatively, the manure tank device is arranged on a mobile frame which is configured to be drawn by a work vehicle, such as an agricultural tractor.

The present invention also relates to a mobile device for manuring, comprising a mobile manure tank device according to the invention as described above and a manuring device configured to be fed with manure from a manure tank of the mobile manure tank device. The mobile manure tank device preferably comprises a mobile frame, more preferably a self-driving mobile frame, on which the manuring device is arranged, so that the manure tank device and the manuring device can be moved together on the public highway and the land to be manured. Alternatively, the manure tank device is arranged together with the manuring device on a mobile frame which is configured to be drawn by a work vehicle, such as an agricultural tractor.

In a preferred embodiment the manuring device comprises a collapsible and extendable manuring arm which can be moved between an extended state and a collapsed state, wherein in the extended state the manuring arm extends substantially transversely of the central longitudinal axis of the mobile device for manuring and in the collapsed state the manuring arm extends substantially parallel to the central longitudinal axis of the mobile device for manuring, wherein the manuring arm preferably comprises a plurality of segments which are connected pivotally to each other, and which in the extended state of the manuring arm extend substantially mutually in line and which in collapsed state of the manuring arm extend substantially parallel to each other.

Mobile devices for manuring with a manuring device comprising such a collapsible and extendable manuring arm are known. Arranged along the manuring arm are manuring members which are fed with manure from a manure tank of the mobile device for manuring and which arrange the manure on or in the ground of the land to be manured. Because the manuring arm extends in the extended state substantially transversely of the longitudinal axis of the mobile device for manuring, a strip of the ground to be manured which is wider than the width of the mobile device for manuring can be manured when the mobile device for manuring is advanced over the ground of the land to be manured in a direction parallel to the longitudinal axis of the device for manuring, so that the overall distance to be travelled by the mobile device for manuring in order to manure the whole ground surface area of the land to be manured is smaller and the time associated therewith is shorter. In addition, it is the case that the wider the strip of land which can be manured in one pass, the fewer passes are necessary in order to manure the whole ground surface area to be manured. Fewer passes means fewer wheel tracks of the mobile device for manuring and, with this, less damage to the land to be manured as a result of the mobile device for manuring driving thereover.

In order to be able to move the mobile device for manuring from and to the land to be manured on the public highway in a direction parallel to the central longitudinal axis thereof the manuring arm is brought into the collapsed state, wherein the manuring arm extends substantially parallel to the longitudinal axis of the mobile device for manuring so that the width of the mobile device for manuring becomes smaller than or equal to the permissible width for transport on the public highway.

In the case that the manuring arm is longer than the device for manuring, the manuring arm is divided into a plurality of segments which are connected pivotally to each other, and which in the extended state of the manuring arm extend substantially mutually in line and which in collapsed state of the manuring arm extend substantially parallel to each other.

In known mobile devices for manuring as described above the manuring device is generally arranged, as seen in longitudinal direction of the device for manuring, behind a single fixed manure tank which feeds the manuring device, and in the collapsed state the manuring arm extends along the manure tank.

The manuring device generally has two manuring arms, wherein each manuring arm extends in the collapsed state along a respective side of the manure tank. In the case of two manuring arms the width of the manure tank is thus limited to the maximum permissible width of the device for manuring minus twice the additional width as a result of a folded-in manuring arm.

It is an object to lengthen the manuring arm(s) of the known devices for manuring of the above stated type. The problem encountered herein is that in the case of longer manuring arms the number of manuring arm segments, and thereby the additional width of a manuring arm in the collapsed state, increases, and the available width for the manure tank thereby decreases. The manure tank must thus be made less wide in order to facilitate the lengthening of the manuring arm(s), whereby the manure storage capacity of the manure tank, i.e. the quantity of manure the manure tank is able to contain, decreases. The manure tank has to be topped up more frequently because of this decrease of the manure storage capacity.

The manure tank device according to the invention provides a solution to the above stated problem.

The expandable manure tank of the manure tank device according to the invention makes it possible to temporarily increase the manure storage capacity for manuring of the land to be manured by bringing the expandable manure tank into the expanded state, and to temporarily reduce the outer dimensions of the expandable manure tank for moving the device for manuring on the public highway by bringing the expandable manure tank into the non-expanded state. With a manure tank device according to the invention it is thus possible to apply longer manuring arms without a decrease, and possibly even an increase, in the manure storage capacity during manuring relative to application of a single fixed manure tank as in known devices for manuring of the above described type.

Particularly favourable for a device for manuring according to the invention is application of a manure tank device as described above with a fixed manure tank and an expandable manure tank, wherein the expandable manure tank is arranged on top of the fixed manure tank. This construction can be easily incorporated into the designs of known devices for manuring having a fixed manure tank with a free upper wall on which the expandable manure tank can be arranged. In the known designs the upper wall of the manure tank and the space thereabove is not used, so that the modifications to the known designs which are needed in order to incorporate the expandable manure tank into the design are minor.

The present invention will be further elucidated hereinbelow on the basis of exemplary embodiments shown in the accompanying drawing. These are non-limitative exemplary embodiments. The same or similar parts, components and elements are designated in the figures with the same reference numerals. In the figures:

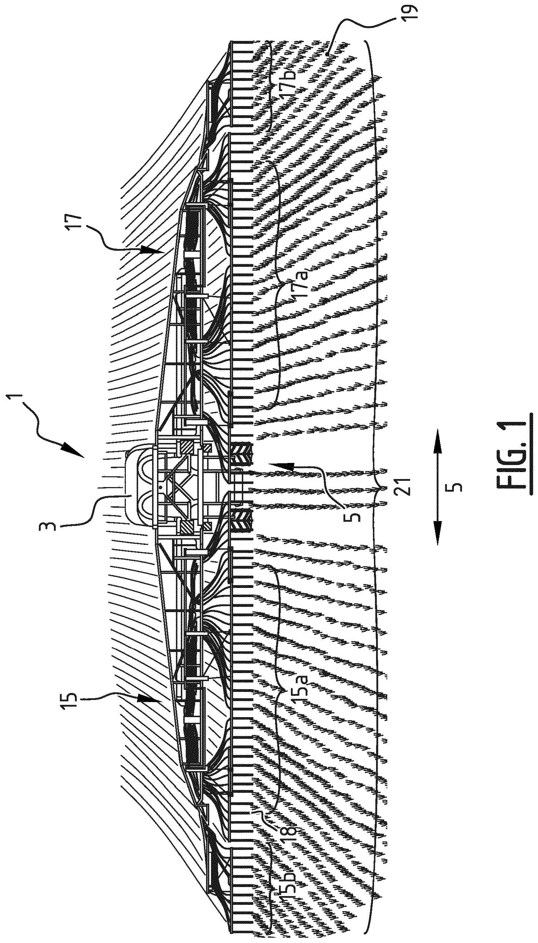

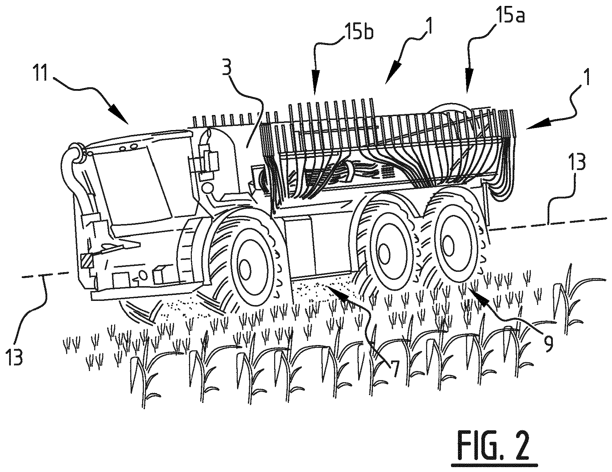

- figures 1-3 show perspective views of a self-driving device for manuring according to the prior art with a fixed manure tank and a manuring device with two collapsible and extendable manuring arms, wherein figure 1 shows the manuring arms in an extended state and figures 1 and 2 show the manuring arms in a collapsed state;

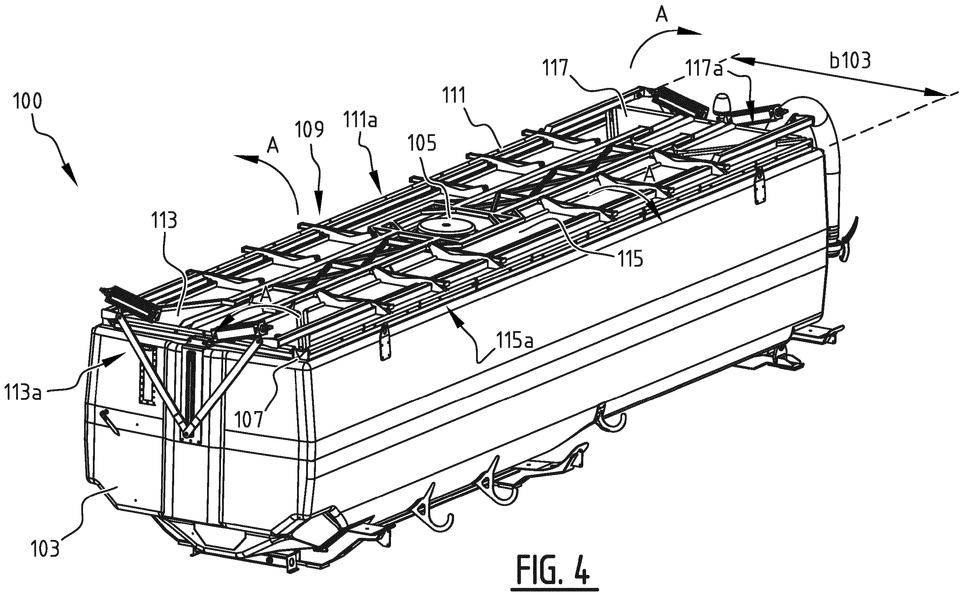

- figures 4-10 show an exemplary embodiment of a mobile manure tank device according to the invention as replacement for the fixed manure tank of the device for manuring as shown in figures 1-3, this manure tank device comprising a fixed manure tank and, arranged on top of this, an expandable manure tank in the form of a manure bag and with a collapsible and extendable skeleton for supporting the manure bag, wherein
   - figure 4 shows a perspective view of the manure tank device with the expandable manure tank in the non-expanded state thereof and with the skeleton in the collapsed state thereof;
   - figures 5-7 show different views of the manure tank device with the expandable manure tank in the non-expanded state thereof and with the skeleton in the extended state thereof;
   - figures 8-10 show different views of the manure tank device with the expandable manure tank in the expanded state thereof and with the skeleton in the extended state thereof;
   - figures 11-14 show different views of an alternative embodiment of the manure tank device of figures 4-10;
   - figures 15 and 16 show a further alternative embodiment of the manure tank device of figures 4-14 in cross-section.

Figures 1-3 show a self-driving device for manuring 1 according to the prior art with a fixed manure tank 3 and a manuring device 5. Self-driving device for manuring 1 has a self-driving frame 7 with a number of wheels 9. On the front side of self-driving device for manuring 1 a driver's cab 11 is arranged on frame 7. Fixed manure tank 3 is arranged on frame 7 behind driver's cab 11, as seen along the central longitudinal axis 13. Manuring device 5 is arranged on frame 7 behind fixed manure tank 13, on the rear side of self-driving device for manuring 1, as seen along the central longitudinal axis 13. Manuring device 5 has two collapsible and extendable manuring arms 15, 17. Manuring arms 15, 17 are each shown with two manuring arm segments 15a, 15b; 17a, 17b which are connected pivotally to each other. Figure 1 shows manuring arms 15, 17 in the extended state. In this extended state manuring arms 15, 17 extend substantially transversely of the central longitudinal axis 13 of device for manuring 1. Manuring arm segments 15a, 15b; 17a, 17b extend mutually in line here. Arranged along manuring arms 15, 17 are manuring members 18 which are fed with manure from fixed manure tank 3 in order to manure the land to be manured 19 over which device for manuring 1 drives. As shown in figure 1, owing to manuring arms 15, 17 in the extended state it is possible to manure a strip 21 of the land to be manured 19 which is considerably wider than the width b of device for manuring 1.

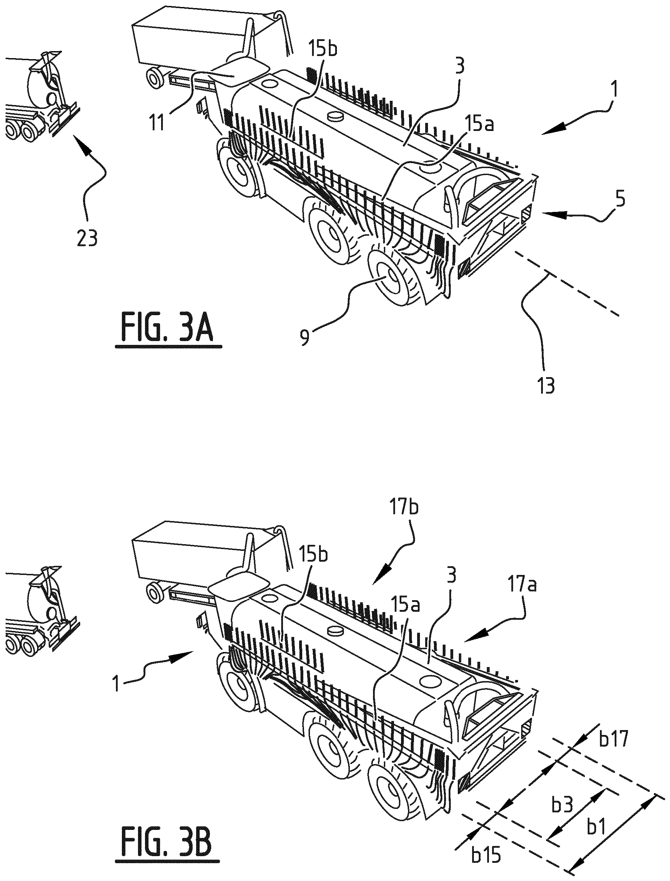

Figures 2, 3A and 3B show manuring arms 15, 17 in the collapsed state. In the collapsed state manuring arms 15, 17 extend substantially parallel to the central longitudinal axis 13 of device for manuring 1, each along one of the two sides of fixed manure tank 3. When manuring arms 15, 17 are brought from the extended state as shown in figure 1 into the collapsed state, the manuring arm segments 15a, 15b; 17a, 17b which are connected pivotally to each other move from a state in which they extend mutually in line to a state in which they extend substantially parallel to each other. The width b1 of device for manuring 1 at the position of the folded-in manuring arms 15, 17 is equal to the width b3 of fixed manure tank 3 and twice the additional width b15, b17 of the folded-in manuring arms 15, 17. To enable driving on the public highway this width b1 of the device for manuring at the position of the folded-in manuring arms 15, 17 may be no greater than the permissible width allowed on the public highway.

Figure 2 shows that, after manure tank 3 has become depleted during the manuring as shown in figure 1, device for manuring 1 drives back over the land to be manured 19 to the starting location, with manuring arms 15, 17 in the collapsed state, in order to fill fixed manure tank 3. As shown in figures 3A and 3B, at the starting location a second mobile manure tank 23 is waiting to top up fixed manure tank 3 so that, having driven back to the location on the land to be manured 19 where fixed manure tank 3 became depleted, device for manuring 1 can continue the manuring.

Figures 4-10 show an exemplary embodiment of a mobile manure tank device 100 according to the invention. The mobile manure tank device 100 is configured to be arranged on frame 5 of the self-driving device for manuring 1 of figures 1-3, instead of the fixed manure tank 3.

Manure tank device 100 has a fixed manure tank 103 with arranged on top thereof an expandable manure tank in the form of a manure bag 105.

Fixed manure tank 103 has a width b103 which is equal to the width b3 of the manure tank 3 of figures 1-3. The width b 103 can also be smaller than the width b3 of the manure tank 3 of figures 1-3. In that case it is possible for the overall width b1 of device for manuring 1 at the position of manuring arms 15, 17 in the collapsed state thereof to remain the same if longer manuring arms 15, 17 with more manuring arm segments are used. The smaller width b103 of fixed manure tank 103 can then compensate for the greater additional width b 15, b17 of manuring arms with more manuring arm segments, so that the overall width b 1 of device for manuring 1 at the position of manuring arms 15, 17 in the collapsed state thereof does not increase.

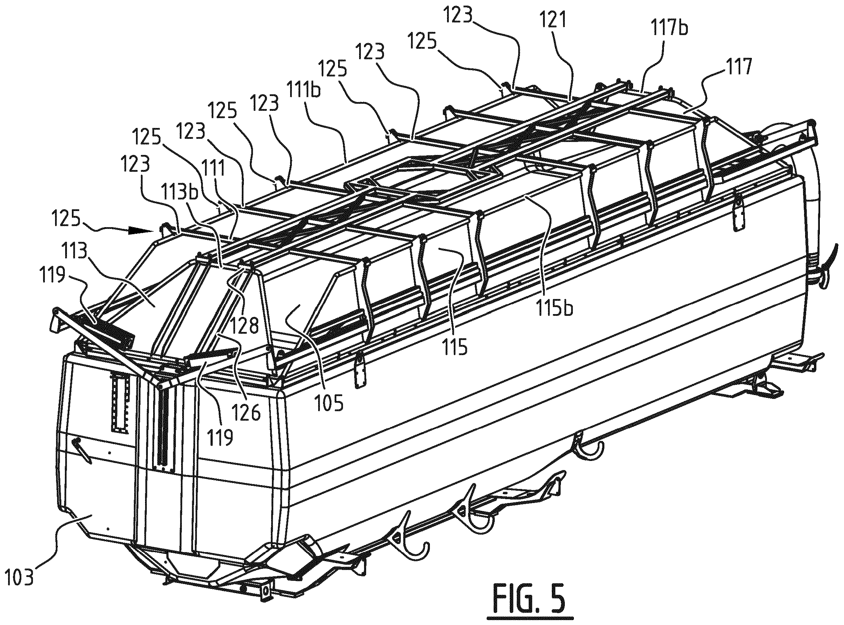

Manure bag 105 is particularly arranged on top of an upper wall 107 of fixed manure tank 103. Manure tank device 100 is also provided with a collapsible and extendable skeleton 109 which partially surrounds manure bag 105. The collapsible and extendable skeleton 109 has a number of skeleton segments 111, 113, 115, 117 which at a pivoting end 111a, 113a, 115a, 117a thereof are arranged pivotally on upper wall 107 of fixed manure tank 103 along the periphery of manure bag 105. Skeleton 109 is shown in the collapsed state in figure 4. In the collapsed state the skeleton segments 111, 113, 115, 117 lie on the non-expanded manure bag 105. Skeleton 109 can be brought from the collapsed state into the extended state by means of a number of actuators embodied as working cylinder 119. Skeleton segments 111, 113, 115, 117 are here pivoted relative to upper wall 107 in the direction of arrows A, away from manure bag 105. Figures 5-7 show skeleton 109 in the extended state.

As shown in figures 4-7, each skeleton segment is connected at a free end 111b, 113b, 115b, 117b thereof lying opposite pivoting end 111a, 113a, 115a, 117a to a coupling construction 121 which connects the free ends of skeleton segments 111, 113, 115, 117 to each other. Coupling construction 121 comprises a plurality of coupling rods which are mutually connected and which mutually couple skeleton segments 111, 113, 115, 117 which are positioned opposite each other. Free ends 111b, 113b, 115b, 117b of skeleton segments 111, 113, 115, 117 are coupled movably to coupling construction 121. In the shown exemplary embodiment coupling rods of the coupling construction form a rail 123 over which a carriage 125 formed on the free ends 111b and 115b of skeleton segments 111 and 115 can slide. In the shown exemplary embodiment rails 126, over which a carriage 128 formed on coupling construction 121 can slide, are arranged on skeleton segments 113 and 117. Skeleton segments 111, 113, 115, 117 and coupling construction 121 are such that skeleton segments 111, 113, 115, 117 extend simultaneously.

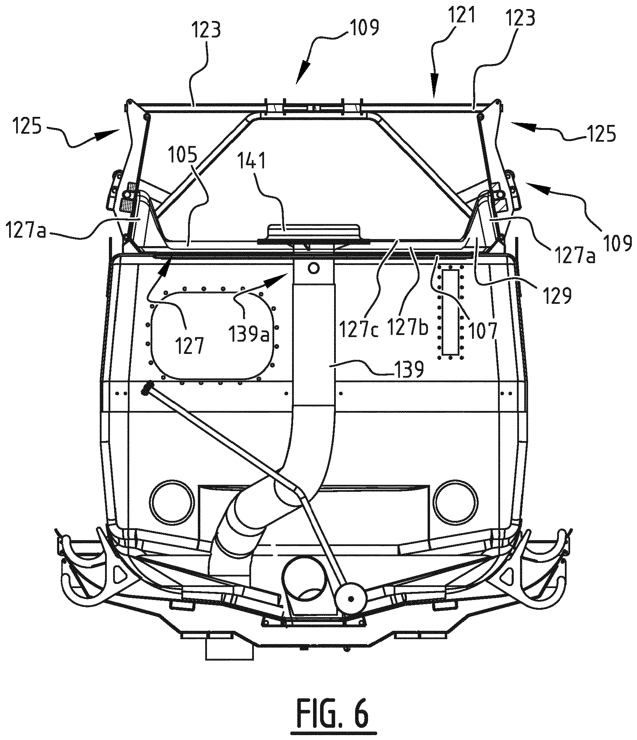

As shown in figure 6, a portion 127a of the flexible wall 127 of manure bag 105 is connected to skeleton 109 so that portion 127a of wall 127 is extended and erected when skeleton 109 is brought into the extended state.

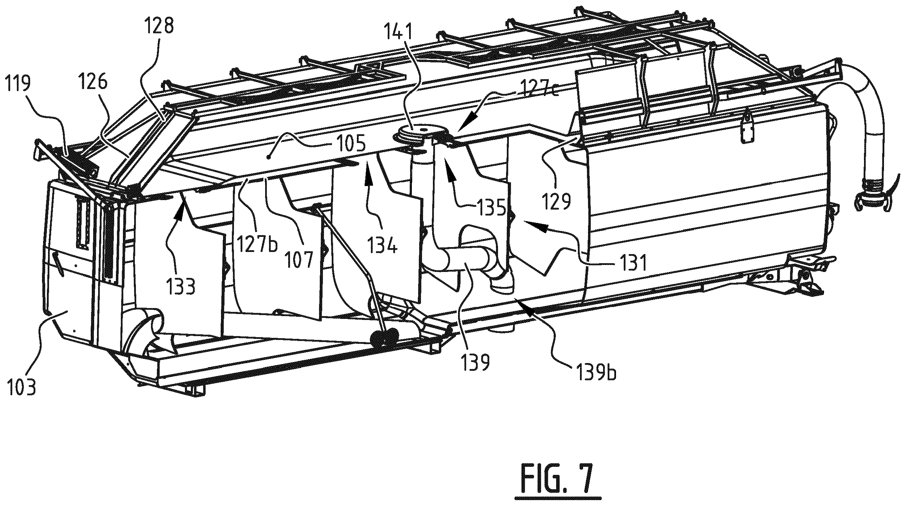

Figures 6 and 7 show that the flexible wall 127 of manure bag 105 encloses an inner space 129 of manure bag 105. A portion 127b of flexible wall 127 lies against the outer surface of upper wall 107 of fixed manure tank 103. As shown in figure 7, the walls of fixed manure tank 103, including upper wall 107, enclose an inner space 131 of fixed manure tank 103. The inner space 131 of fixed manure tank 103 and the inner space 129 of manure bag 105 are connected to each other for allowing passage of liquid via connecting means, in this case passage openings 133, 134, 135 in upper wall 107 of fixed manure tank 103 and in portion 127b of the flexible wall 127 of manure bag 103. In this example passage openings 133, 134, 135 are not closable, although they could be closable in an alternative embodiment. Arranged in inner space 131 of fixed manure tank 103 is a float arm 137 of a manure level measuring device. In figure 7 the fixed manure tank 103 is empty so that the float at the free end of float arm 137 lies on the bottom of fixed manure tank 103. As shown in figure 7, a discharge tube 139 extending from inner space 131 of fixed manure tank 103, through passage opening 135 and into inner space 129 of manure bag 105 is arranged in the inner space 131 of fixed manure tank 103. A first end 139a of discharge tube 139 is coupled to an upper portion 127c of the flexible wall 127 of manure bag 105 and a second end 139b of discharge tube 139 debouches out on an underside of fixed manure tank 103. At first end 139a of discharge tube 139 this tube co-acts with a vent 141. This vent 141 is arranged on an opening 143 in the upper portion 127c of flexible wall 127 of manure bag 105. Discharge tube 139 is embodied as flexible hose. The shown vent is arranged directly on the flexible wall of the manure bag. A (collapsible) standpipe, which serves as vent, is alternatively arranged on the flexible wall of the manure bag.

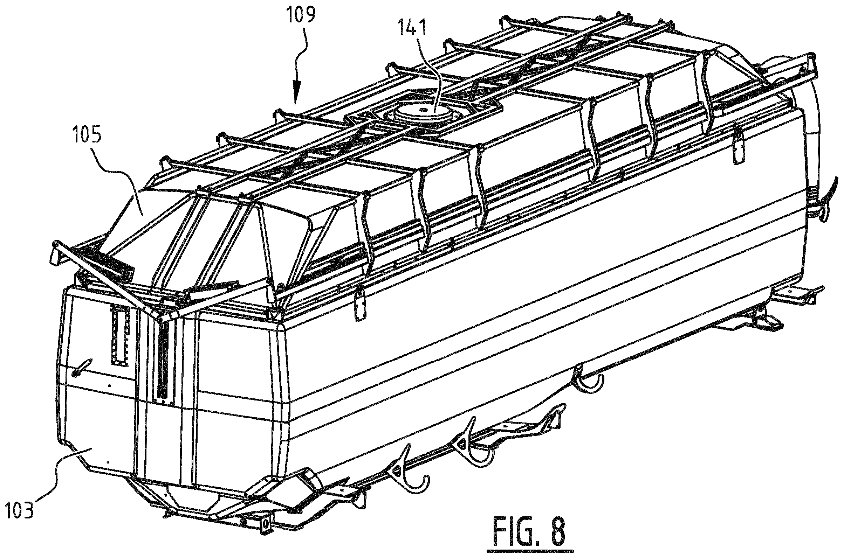

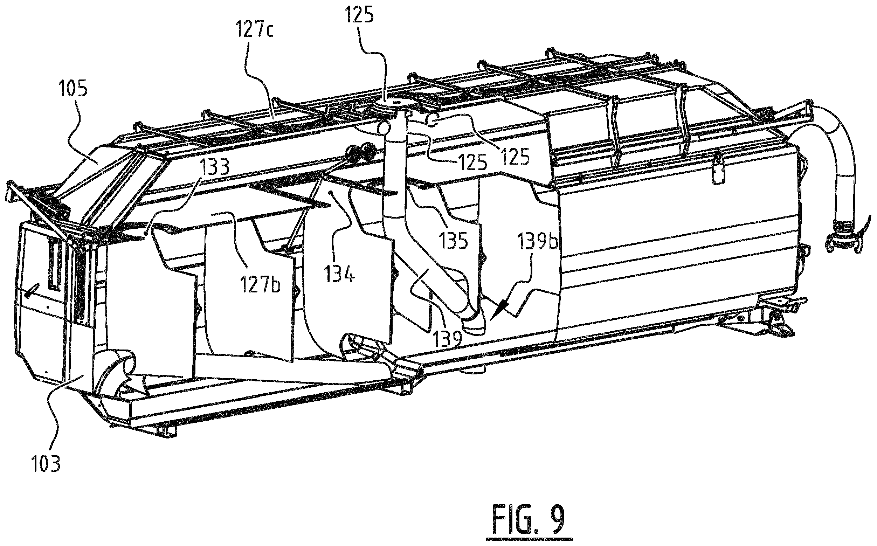

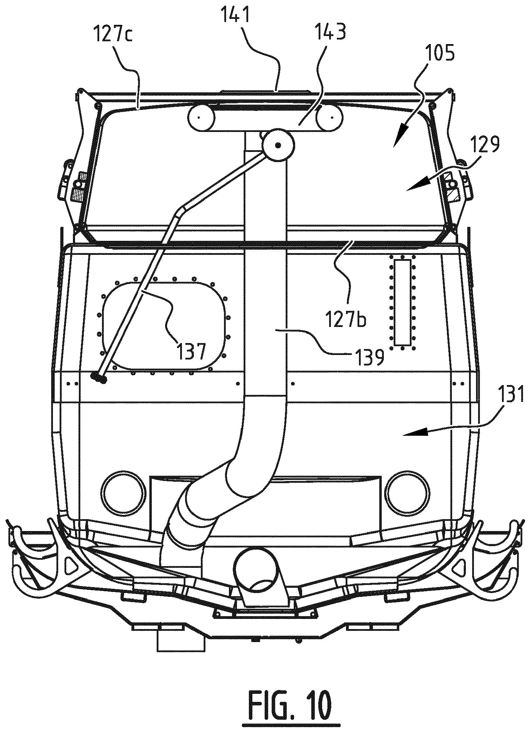

During filling of manure tank device 100 manure is carried into the inner space 131 of fixed manure tank 103 so that the manure level in inner space 131 rises. As soon as the whole inner space 131 of fixed manure tank 103 has been filled with manure, the manure enters inner space 129 of manure bag 127 via passages 133, 134, 135 in the upper wall 107 of fixed manure tank 103 and in the portion 127c lying thereagainst of the flexible wall 127 of manure bag 105. The manure entering inner space 129 of manure bag 105 here forces the expansion of manure bag 105, so that manure bag 105 is brought into an expanded state. Figures 8-10 show manure bag 105 in an expanded state in which manure bag 105 contains the maximum quantity of manure. The flexible wall 127 of manure bag 105 here lies against skeleton 109. If the inner space 129 of manure bag 105 does contain manure, but less manure than shown in figures 8-10, manure bag 105 will take on an expanded state wherein flexible wall 127 is partially slumped. As shown in figure 9, a floating body 143, preferably an inflatable floating body, is arranged in manure bag 105 close to vent 141, against the upper portion 127c of the flexible wall 127 of manure bag 105. Floating body 143 is in particular arranged as a ring around vent 141 and first end 139a of manure discharge tube 139. Floating body 143 ensures that the venting opening of vent 141 and the discharge opening of discharge tube 131 at the first end 139a thereof remain above the level of the manure. When inner space 12 of manure bag 105 is completely filled with manure, the manure level will be forced upward along floating body 143 when additional manure is supplied, and excess manure will flow into the discharge opening close to the first end 139a of discharge tube 139. Because discharge tube 139 is embodied as flexible hose, upper portion 127c of the flexible wall 127 of manure bag 105 will be positioned at different levels, subject to the level of the manure, while discharge tube 139 is connected to this portion of flexible wall 127. Figures 9 and 10 show that when the manure level lies above upper wall 107 of fixed manure tank 103, float arm 137 extends through passage opening 134 so that the float at the free end of float arm 137 is situated in the inner space 129 of manure bag 105.

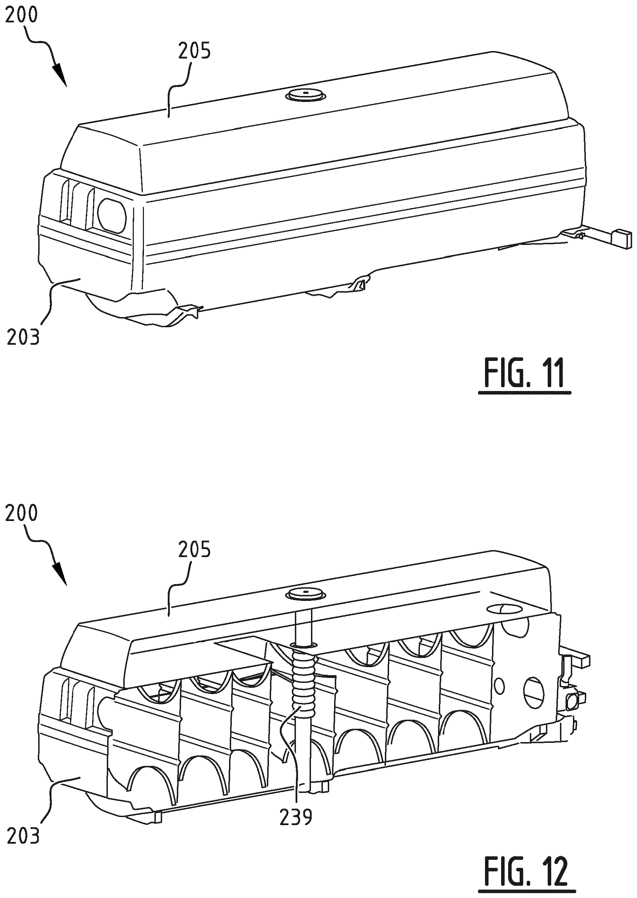

Figures 11-14 show an alternative embodiment of the manure tank device 100 of figures 4-10.

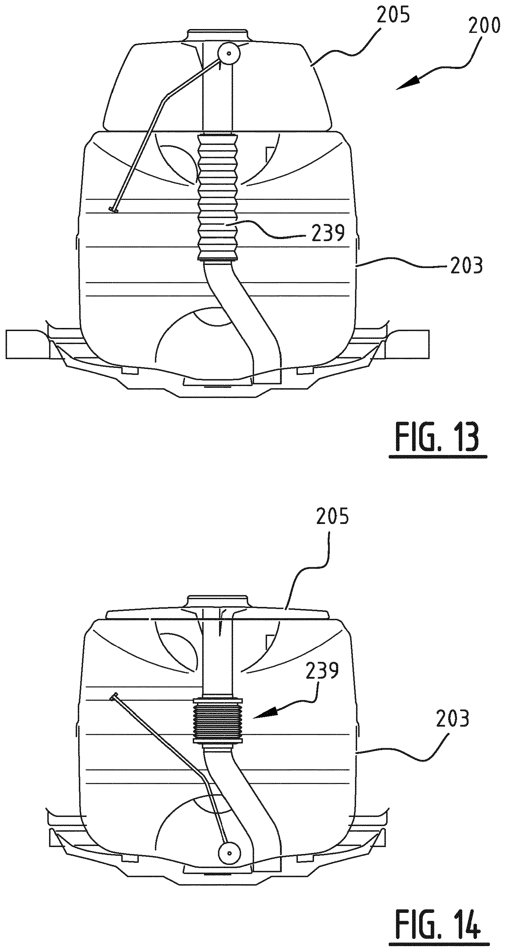

Figures 11-14 show a manure tank device 200 which corresponds to the manure tank device 100 of figures 4-10, with the difference that no collapsible and extendable skeleton is provided which partially surrounds the manure bag 205 on fixed manure tank 203. A second difference is that the flexible hose of discharge tube 239 is embodied as concertina hose. As further alternative the discharge tube can be telescopic (not shown). Figures 11-13 show manure bag 205 in an expanded state. Figure 14 shows manure bag 205 in a non-expanded state.

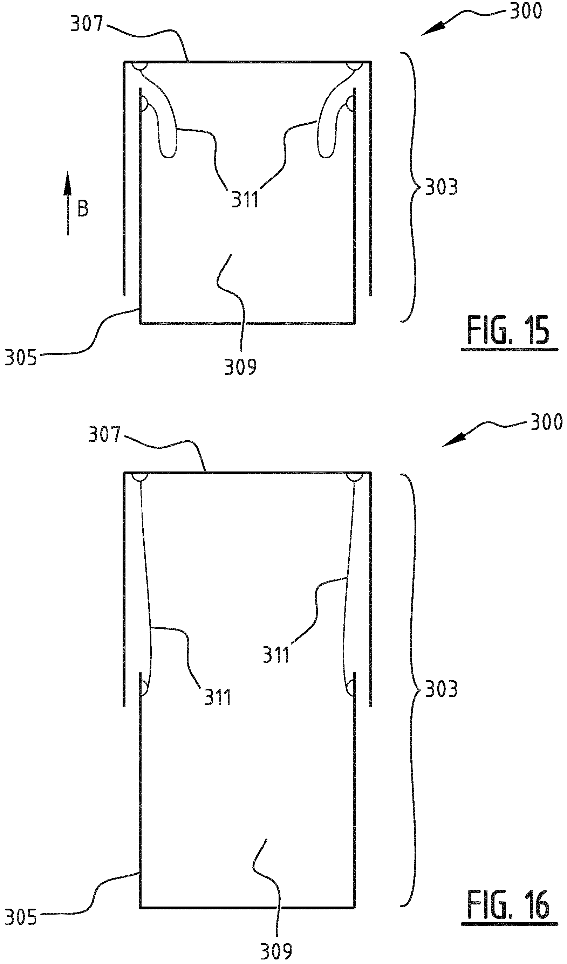

Figures 15 and 16 show schematically a further alternative embodiment of the manure tank devices 100 and 200 of figures 4-14. Figure 15 shows that manure tank device 300 comprises an expandable manure tank 303. Expandable manure tank 303 has a lower part which is embodied as a container 305 which is open toward the top and an upper part which is embodied as a container 307 which is open to the bottom. As shown in figure 15, when manure tank 303 is in the non-expanded state, the container 305 which is open to the top nests in the container 307 which is open to the bottom. In the non-expanded state the container 305 which is open to the top can contain manure in the inner space 309. From the non-expanded state the container 307 which is open to the bottom can be moved upward in the direction of arrow B, so that the volume of inner space 309 of expandable manure tank 303 increases. In figure 16 expandable manure tank 303 is shown in an expanded state. A flexible inner wall 311 ensures that the manure does not enter between the container 305 which is open to the top and the container 307 which is open to the bottom. In this embodiment the expandable manure tank thus has a fixed part and an expandable part.

In the embodiments shown in figures 4-11 the manure bag has a flexible wall which encloses an inner space of the manure bag. Alternatively, the manure bag has a flexible wall which is arranged sealingly against the outer surface of the upper wall of the fixed manure tank, so that the relevant surface and the flexible wall together enclose the inner space of the manure bag. The upper wall of the fixed manure tank is in that case also a wall of the manure bag.

In the embodiment shown in figures 4-10 the manure tank device is shown with an external skeleton. Alternatively, a collapsible and extendable skeleton can be arranged in the manure bag. Such a skeleton can be referred to as internal skeleton. Instead of a skeleton as shown in figures 4-10, it is also possible to support the flexible manure bag using other means, for instance ropes, tensioning straps and so on. It is also possible to support the flexible manure bag with guy ropes.

In the embodiment shown in figures 4-16 a manure tank device is shown which is configured to be arranged on a mobile frame, particularly a mobile frame of a self-driving device for manuring. The manure tank device itself can also comprise a mobile frame on which the expandable manure tank and the optional fixed tank are arranged. This frame can be embodied as self-driving frame or as non-self-driving frame. In the latter case this can be a non-self-driving frame which is configured to be drawn by a self-driving work vehicle, such as an agricultural tractor.

The present invention relates not only to the manure tank device defined by any of claims 1-10 but also a mobile device for manuring as defined by any of claims 11- 14.

The present invention is by no means limited to the above described exemplary embodiments. The rights sought are defined by the following claims, within the scope of which many modifications can be envisaged.

## Claims

1. Mobile manure tank device (100, 200, 300), comprising an expandable manure tank (105, 303), wherein the manure storage capacity of the manure tank device (100, 200, 300) can be increased by bringing the expandable manure tank (105, 203) into an expanded state, and the dimensions of the manure tank device (100, 200, 300) can be reduced, by bringing the expandable manure tank (105, 203) into the non-expanded state,
**characterized in that** the expandable manure tank (105, 303) comprises a manure bag (105, 205) configured to hold manure therein.

2. Mobile manure tank device (100, 200, 300) according to claim 1, wherein:
- the manure bag (105, 205) has a flexible wall (127) enclosing an inner space (129) of the manure bag (105, 205), and/or
- the manure bag (105, 205) has a flexible wall (127) arranged sealingly against a surface of a construction element of the manure tank device (100, 200, 300), so that the relevant surface and the flexible wall (127) together enclose the inner space (129) of the manure bag (105, 205).

3. Mobile manure tank device (100, 200, 300) according to claim 1 or 2, wherein a floating body (143), preferably an inflatable floating body (143), is arranged in the manure bag (105, 205) on a portion of the wall of the manure bag (105, 205),
wherein the manure bag (105, 205) is optionally provided with a vent (141),
wherein a floating body (143), preferably an inflatable floating body (143), is optionally provided in the manure bag (105, 205) close to the vent (141).

4. Mobile manure tank device (100, 200, 300) according to claim 1 or 2, wherein the mobile manure tank device (100, 200, 300) comprises a fixed manure tank (103, 203) and the manure bag (105, 205) is arranged on top of an upper wall (107) of the fixed manure tank (103, 203), wherein the inner space (131) of the fixed manure tank (103, 203) and the inner space (129) of the manure bag (105, 205) are optionally connected to each other via at least one passage opening (122, 124, 135) in the upper wall (107) of the fixed manure tank (103, 203), wherein optionally:
- a float arm (137) of a manure level measuring device is arranged in the fixed manure tank (103, 203) and wherein the float arm (137) can enter the inner space (129) of the manure bag (105, 205) via the at least one passage (122, 124, 135) opening, and/or
- the manure tank device (100, 200, 300) is provided with a manure overflow discharge comprising a discharge tube (139) which extends in the inner space (131) of the fixed manure tank EP3335537 (103, 203), through the at least one passage opening (122, 124, 135) and into the inner space (129) of the manure bag (105, 205), wherein a first end (139a) of the discharge tube (139) is coupled to a wall of the manure bag (105, 205) and a second end (129b) of the discharge tube (139) debouches out on an underside of the fixed manure tank (103, 203), wherein optionally:
- the first end (139a) of the discharge tube (139) co-acts with a vent (141) with which the manure bag (105, 205) is provided, and/or
- the discharge tube (139) is a flexible tube or hose, and/or
- the discharge tube (139) is telescopic.

5. Mobile manure tank device (100, 200, 300) according to any of the claims 1-4, wherein the manure bag (105, 205) comprises a flexible wall (127) and the manure tank device (100, 200, 300) comprises a collapsible and extendable skeleton (109) which is configured to support the flexible wall (127) of the manure bag (105, 205), wherein optionally:
- the manure bag (105, 205) is arranged on a construction element of the manure tank device (100, 200, 300) and the collapsible and extendable skeleton (109) comprises a number of skeleton segments (111, 113, 115, 117) which at a pivoting end (111a, 113a, 115a, 117a) thereof are arranged pivotally on the relevant construction element along the periphery of the manure bag (105, 205), wherein each skeleton segment (111, 113, 115, 117) is optionally coupled at a free end (111b, 113b, 115b, 117b) thereof lying opposite the pivoting end (111a, 113a, 115a, 117a) to at least one of the other skeleton segments (111, 113, 115, 117), particularly coupled to the free end (111b, 113b, 115b, 117b) of the at least one other skeleton segment (111, 113, 115, 117), wherein optionally:
- two mutually opposite skeleton segments (111, 113, 115, 117) are coupled in each case, and/or
- the coupling is realized by means of coupling members, particularly coupling rods, wherein the coupling members are preferably mutually connected to form a coupling construction (121) which connects the free ends (111b, 113b, 115b, 117b) of the skeleton segments (111, 113, 115, 117) to each other, and/or
- the skeleton (109) can be collapsed and extended by means of one or more actuators, wherein at least a portion of the wall of the manure bag (105, 205) is optionally connected to the skeleton (109).

6. Mobile manure tank device (100, 200, 300) according to any of the foregoing claims, wherein:
- the manure tank device (100, 200, 300) also comprises a fixed manure tank (103, 203), and/or
- the expandable manure tank (105, 303) can be brought into an expanded state and a non-expanded state, wherein the inner and outer dimensions of the expandable manure tank (105, 303) in the expanded state are greater than the inner and outer dimensions of the expandable manure tank (105, 303) in the non-expanded state, and/or
- the expandable manure tank (105, 303) is configured to already contain manure in the non-expanded state thereof.

7. Mobile manure tank device (100, 200, 300) according to any of the foregoing claims, wherein the expandable manure tank (105, 303) has an expandable part and a fixed part.

8. Mobile manure tank device according to any of the foregoing claims, wherein the expandable manure tank (105, 303) is arranged on the fixed manure tank (103, 203), wherein optionally:
- a wall of the expandable manure tank (105, 303) is arranged against a wall of the fixed manure tank (103, 203), and/or
- the expandable manure tank (105, 303) and the fixed manure tank (103, 203) share a wall, and/or
- the expandable manure tank (105, 303) is arranged on top of the fixed manure tank (103, 203).

9. Mobile manure tank device (100, 200, 300) according to claim 8, wherein
- the inner space (131) of the fixed manure tank (103, 203) and the inner space of the expandable manure tank (105, 303) are connected to each other for allowing passage of liquid by means of optionally closable connecting means, and/or
- the inner space of the fixed manure tank (103, 203) is connected to the inner space of the expandable manure tank (105, 303), wherein the inner space of the fixed manure tank (103, 203) is optionally connected to the inner space (309) of the expandable manure tank (105, 303) by means of a passage opening (122, 124, 135) in the walls which are arranged against each other or the shared wall of the fixed manure tank (103, 203) and the expandable manure tank (105, 303).

10. Mobile manure tank device (100, 200, 300) according to any of the foregoing claims, also comprising a mobile frame (7) on which the expandable manure tank (105, 303) and, if provided, the fixed manure tank (103, 203) are arranged, wherein the mobile frame (7) is configured as self-driving mobile frame (7).

11. Mobile device for manuring (1), comprising a mobile manure tank device (100, 200, 300) according to any of the foregoing claims and a manuring device (5) configured to be fed with manure from a manure tank of the mobile manure tank device (100, 200, 300).

12. Mobile device for manuring (1) according to claim 11, comprising a collapsible and extendable manuring arm (15, 17) which can be moved between an extended state and a collapsed state, wherein in the extended state the manuring arm (15, 17) extends substantially transversely of the central longitudinal axis (13) of the mobile device for manuring (1) and in the collapsed state the manuring arm (15, 17) extends substantially parallel to the central longitudinal axis (13) of the mobile device for manuring (1).

13. Mobile device for manuring (1) according to claim 12, wherein the manuring arm (15, 17) comprises a plurality of segments which are connected pivotally to each other, and which in the extended state of the manuring arm (15, 17) extend substantially mutually in line and which in collapsed state of the manuring arm (15, 17) extend substantially parallel to each other.

14. Mobile device for manuring (1) according to claim 12 or 13, wherein the manure tank device (100, 200, 300) comprises a fixed manure tank (103, 203) and an expandable manure tank (105, 303), wherein the expandable manure tank (105, 303) is arranged on top of the fixed manure tank (103, 203), and wherein the collapsible and extendable manuring arm (15, 17) extends in the collapsed state thereof along the fixed manure tank (103, 203).

## Patentansprüche

1. Bewegbare Düngertankvorrichtung (100, 200, 300), umfassend einen erweiterbaren Düngertank (105, 303), wobei die Düngerlagerkapazität der Düngertankvorrichtung (100, 200, 300) durch Bringen des erweiterbaren Düngertanks (105, 203) in einen erweiterten Zustand vergrößert werden kann, und die Abmessungen der Düngertankvorrichtung (100, 200, 300) durch Bringen des erweiterbaren Düngertanks (105, 203) in den nicht erweiterten Zustand reduziert werden können,
**dadurch gekennzeichnet, dass** der erweiterbare Düngertank (105, 303) einen Düngerbeutel (105, 205) umfasst, der konfiguriert ist, um Dünger darin zu halten.

2. Bewegbare Düngertankvorrichtung (100, 200, 300) nach Anspruch 1, wobei:
- der Düngerbeutel (105, 205) eine flexible Wand (127) aufweist, die einen Innenraum (129) des Düngerbeutels (105, 205) umschließt, und/oder
- der Düngerbeutel (105, 205) eine flexible Wand (127) aufweist, die an einer Oberfläche eines Konstruktionselements der Düngertankvorrichtung (100, 200, 300) abdichtend angeordnet ist, sodass die betreffende Oberfläche und die flexible Wand (127) gemeinsam den Innenraum (129) des Düngerbeutels (105, 205) umschließen.

3. Bewegbare Düngertankvorrichtung (100, 200, 300) nach Anspruch 1 oder 2, wobei in dem Düngerbeutel (105, 205) an einem Abschnitt der Wand des Düngerbeutels (105, 205) ein Schwimmkörper (143), vorzugsweise ein aufblasbarer Schwimmkörper (143), angeordnet ist,
wobei der Düngerbeutel (105, 205) optional mit einer Entlüftung (141) versehen ist,
wobei ein Schwimmkörper (143), vorzugsweise ein aufblasbarer Schwimmkörper (143), optional in dem Düngerbeutel (105, 205) nahe der Entlüftung (141) bereitgestellt ist.

4. Bewegbare Düngertankvorrichtung (100, 200, 300) nach Anspruch 1 oder 2, wobei die bewegbare Düngertankvorrichtung (100, 200, 300) einen festen Düngertank (103, 203) umfasst und der Düngerbeutel (105, 205) auf einer oberen Wand (107) des festen Düngertanks (103, 203) angeordnet ist, wobei der Innenraum (131) des festen Düngertanks (103, 203) und der Innenraum (129) des Düngerbeutels (105, 205) optional über mindestens eine Durchgangsöffnung (122, 124, 135) in der oberen Wand (107) des festen Düngertanks (103, 203) miteinander verbunden sind, wobei optional:
- ein Schwimmerarm (137) einer Düngerfüllstandsmessvorrichtung in dem festen Düngertank (103, 203) angeordnet ist und wobei der Schwimmerarm (137) über die mindestens eine Durchgangs(122, 124, 135)-Öffnung in den Innenraum (129) des Düngerbeutels (105, 205) eintreten kann, und/oder
- die Düngertankvorrichtung (100, 200, 300) mit einem Düngerüberlaufablass versehen ist, umfassend ein Ablassrohr (139), das sich in den Innenraum (131) des festen Düngertanks (103, 203) durch die mindestens eine Durchgangsöffnung (122, 124, 135) und in den Innenraum (129) des Düngerbeutels (105, 205) erstreckt, wobei ein erstes Ende (139a) des Ablassrohrs (139) mit einer Wand des Düngerbeutels (105, 205) verbunden ist und ein zweites Ende (129b) des Ablassrohrs (139) an einer Unterseite des festen Düngertanks (103, 203) mündet, wobei optional:
- das erste Ende (139a) des Ablassrohrs (139) mit einer Entlüftung (141) zusammenwirkt, mit der der Düngerbeutel (105, 205) versehen ist, und/oder
- das Ablassrohr (139) ein flexibles Rohr oder ein flexibler Schlauch ist, und/oder
- das Ablassrohr (139) teleskopisch ist.

5. Bewegbare Düngertankvorrichtung (100, 200, 300) nach einem der Ansprüche 1 bis 4, wobei der Düngerbeutel (105, 205) eine flexible Wand (127) aufweist und die Düngertankvorrichtung (100, 200, 300) ein zusammenlegbares und erweiterbares Gerüst (109) aufweist, das konfiguriert ist, um die flexible Wand (127) des Düngerbeutels (105, 205) zu tragen, wobei optional:
- der Düngerbeutel (105, 205) an einem Konstruktionselement der Düngertankvorrichtung (100, 200, 300) angeordnet ist und das zusammenlegbare und erweiterbare Gerüst (109) eine Anzahl von Gerüstsegmenten (111, 113, 115, 117) umfasst, die an einem Schwenkende (111a, 113a, 115a, 117a) davon schwenkbar an dem betreffenden Konstruktionselement entlang des Umfangs des Düngerbeutels (105, 205) angeordnet sind, wobei jedes Gerüstsegment (111, 113, 115, 117) optional an einem freien Ende (111b, 113b, 115b, 117b) davon, das dem Schwenkende (111a, 113a, 115a, 117a) gegenüberliegt, mit mindestens einem der anderen Gerüstsegmente (111, 113, 115, 117) gekoppelt ist, insbesondere mit dem freien Ende (111b, 113b, 115b, 117b) des mindestens einen anderen Gerüstsegments (111, 113, 115, 117) gekoppelt ist, wobei optional:
- zwei einander gegenüberliegende Gerüstsegmente (111, 113, 115, 117) in jedem Fall gekoppelt sind, und/oder
- das Koppeln mittels Kopplungsgliedern, insbesondere Kopplungsstangen, erfolgt, wobei die Kopplungsglieder vorzugsweise miteinander verbunden sind, um eine Kopplungskonstruktion (121) auszubilden, die die freien Enden (111b, 113b, 115b, 117b) der Gerüstsegmente (111, 113, 115, 117) miteinander verbindet, und/oder
- das Gerüst (109) mittels eines oder mehrerer Aktuatoren zusammengelegt und erweitert werden kann, wobei mindestens ein Abschnitt der Wand des Düngerbeutels (105, 205) mit dem Gerüst (109) optional verbunden ist.

6. Bewegbare Düngertankvorrichtung (100, 200, 300) nach einem der vorstehenden Ansprüche, wobei:
- die Düngertankvorrichtung (100, 200, 300) außerdem einen festen Düngertank (103, 203) umfasst, und/oder
- der erweiterbare Düngertank (105, 303) in einen erweiterten Zustand und einen nicht erweiterten Zustand gebracht werden kann, wobei die Innen- und Außenabmessungen des erweiterbaren Düngertanks (105, 303) in dem erweiterten Zustand größer als die Innen- und Außenabmessungen des erweiterbaren Düngertanks (105, 303) in dem nicht erweiterten Zustand sind, und/oder
- der erweiterbare Düngertank (105, 303) konfiguriert ist, um in dem nicht erweiterten Zustand davon bereits Dünger zu enthalten.

7. Bewegbare Düngertankvorrichtung (100, 200, 300) nach einem der vorstehenden Ansprüche, wobei der erweiterbare Düngertank (105, 303) einen erweiterbaren Teil und einen festen Teil aufweist.

8. Bewegbare Düngertankvorrichtung nach einem der vorstehenden Ansprüche, wobei der erweiterbare Düngertank (105, 303) auf dem festen Düngertank (103, 203) angeordnet ist, wobei optional:
- eine Wand des erweiterbaren Düngertanks (105, 303) an einer Wand des festen Düngertanks (103, 203) angeordnet ist, und/oder
- der erweiterbare Düngertank (105, 303) und der feste Düngertank (103, 203) eine Wand teilen, und/oder
- der erweiterbare Düngertank (105, 303) auf dem festen Düngertank (103, 203) angeordnet ist.

9. Bewegbare Düngertankvorrichtung (100, 200, 300) nach Anspruch 8, wobei
- der Innenraum (131) des festen Düngertanks (103, 203) und der Innenraum des erweiterbaren Düngertanks (105, 303) zum Ermöglichen eines Durchgangs von Flüssigkeit mittels optional verschließbarer Verbindungsmittel miteinander verbunden sind, und/oder
- der Innenraum des festen Düngertanks (103, 203) mit dem Innenraum des erweiterbaren Düngertanks (105, 303) verbunden ist, wobei der Innenraum des festen Düngertanks (103, 203) optional mittels einer Durchgangsöffnung (122, 124, 135) in den Wänden, die aneinander angeordnet sind, oder der geteilten Wand des festen Düngertanks (103, 203) und des erweiterbaren Düngertanks (105, 303) mit dem Innenraum (309) des erweiterbaren Düngertanks (105, 303) verbunden ist.

10. Bewegbare Düngertankvorrichtung (100, 200, 300) nach einem der vorstehenden Ansprüche, außerdem umfassend einen bewegbaren Rahmen (7), auf dem der erweiterbare Düngertank (105, 303) und, falls bereitgestellt, der feste Düngertank (103, 203) angeordnet sind, wobei der bewegbare Rahmen (7) als selbstfahrender bewegbarer Rahmen (7) konfiguriert ist.

11. Bewegbare Vorrichtung zum Düngen (1), umfassend eine bewegbare Düngertankvorrichtung (100, 200, 300) nach einem der vorstehenden Ansprüche und eine Düngevorrichtung (5), die konfiguriert ist, um mit Dünger aus einem Düngertank der bewegbaren Düngertankvorrichtung (100, 200, 300) versorgt zu werden.

12. Bewegbare Vorrichtung zum Düngen (1) nach Anspruch 11, umfassend einen zusammenlegbaren und erweiterbaren Düngerarm (15, 17), der zwischen einem erweiterten Zustand und einem zusammengelegten Zustand bewegt werden kann, wobei sich der Düngerarm (15, 17) in dem erweiterten Zustand im Wesentlichen quer zu der Mittellängsachse (13) der bewegbaren Vorrichtung zum Düngen (1) erstreckt und sich der Düngerarm (15, 17) in dem zusammengelegten Zustand im Wesentlichen parallel zu der Mittellängsachse (13) der bewegbaren Vorrichtung zum Düngen (1) erstreckt.

13. Bewegbare Vorrichtung zum Düngen (1) nach Anspruch 12, wobei der Düngerarm (15, 17) eine Vielzahl von Segmenten aufweist, die schwenkbar miteinander verbunden sind, und die in dem erweiterten Zustand des Düngerarms (15, 17) im Wesentlichen in einer Linie zueinander verlaufen und die in dem zusammengelegten Zustand des Düngerarms (15, 17) im Wesentlichen parallel zueinander verlaufen.

14. Bewegbare Vorrichtung zum Düngen (1) nach Anspruch 12 oder 13, wobei die Düngertankvorrichtung (100, 200, 300) einen festen Düngertank (103, 203) und einen erweiterbaren Düngertank (105, 303) umfasst, wobei der erweiterbare Düngertank (105, 303) auf dem festen Düngertank (103, 203) angeordnet ist, und wobei der zusammenlegbare und erweiterbare Düngerarm (15, 17) in dem zusammengelegten Zustand davon entlang des festen Düngertanks (103, 203) verläuft.

## Revendications

1. Dispositif de réservoir à fumier mobile (100, 200, 300), comprenant un réservoir à fumier expansible (105, 303), dans lequel la capacité de stockage de fumier du dispositif de réservoir à fumier (100, 200, 300) peut être augmentée en amenant le réservoir à fumier expansible (105, 203) dans un état expansé, et les dimensions du dispositif de réservoir à fumier (100, 200, 300) peuvent être réduites, en amenant le réservoir à fumier expansible (105, 203) dans l'état non expansé,
**caractérisé en ce que** le réservoir à fumier expansible (105, 303) comprend un sac à fumier (105, 205) conçu pour contenir du fumier à l'intérieur de celui-ci.

2. Dispositif de réservoir à fumier mobile (100, 200, 300) selon la revendication 1, dans lequel:
- le sac à fumier (105, 205) a une paroi flexible (127) délimitant un espace interne (129) du sac à fumier (105, 205), et/ou
- le sac à fumier (105, 205) a une paroi flexible (127) agencée de manière étanche contre une surface d'un élément de construction du dispositif de réservoir à fumier (100, 200, 300), de sorte que la surface concernée et la paroi flexible (127) délimitent ensemble l'espace interne (129) du sac à fumier (105, 205).

3. Dispositif de réservoir à fumier mobile (100, 200, 300) selon la revendication 1 ou 2, dans lequel un corps flottant (143), de préférence un corps flottant (143) gonflable, est agencé dans le sac à fumier (105, 205) sur une portion de la paroi du sac à fumier (105, 205),
dans lequel le sac à fumier (105, 205) est facultativement pourvu d'un évent (141),
dans lequel un corps flottant (143), de préférence un corps flottant (143) gonflable, est facultativement fourni dans le sac à fumier (105, 205) près de l'évent (141).

4. Dispositif de réservoir à fumier mobile (100, 200, 300) selon la revendication 1 ou 2, dans lequel le dispositif de réservoir à fumier mobile (100, 200, 300) comprend un réservoir à fumier fixe (103, 203) et le sac à fumier (105, 205) est agencé en haut d'une paroi supérieure (107) du réservoir à fumier fixe (103, 203), dans lequel l'espace interne (131) du réservoir à fumier fixe (103, 203) et l'espace interne (129) du sac à fumier (105, 205) sont facultativement reliés l'un à l'autre par l'intermédiaire d'au moins une ouverture de passage (122, 124, 135) dans la paroi supérieure (107) du réservoir à fumier fixe (103, 203), dans lequel facultativement:
- un bras de flotteur (137) d'un dispositif de mesure de niveau de fumier est agencé dans le réservoir à fumier fixe (103, 203) et dans lequel le bras de flotteur (137) peut entrer dans l'espace interne (129) du sac à fumier (105, 205) par l'intermédiaire de l'au moins une ouverture de passage (122, 124, 135), et/ou
- le dispositif de réservoir à fumier (100, 200, 300) est pourvu d'une décharge de trop-plein de fumier comprenant un tube de décharge (139) qui s'étend dans l'espace interne (131) du réservoir à fumier fixe (103, 203), à travers l'au moins une ouverture de passage (122, 124, 135) et dans l'espace interne (129) du sac à fumier (105, 205), dans lequel une première extrémité (139a) du tube de décharge (139) est accouplée à une paroi du sac à fumier (105, 205) et une seconde extrémité (129b) du tube de décharge (139) aboutit sur un côté inférieur du réservoir à fumier fixe (103, 203), dans lequel facultativement:
- la première extrémité (139a) du tube de décharge (139) coopère avec un évent (141) dont le sac à fumier (105, 205) est pourvu, et/ou
- le tube de décharge (139) est un tube flexible ou un boyau, et/ou
- le tube de décharge (139) est télescopique.

5. Dispositif de réservoir à fumier mobile (100, 200, 300) selon l'une quelconque des revendications 1 à 4, dans lequel le sac à fumier (105, 205) comprend une paroi flexible (127) et le dispositif de réservoir à fumier (100, 200, 300) comprend un squelette rétractable et extensible (109) qui est conçu pour supporter la paroi flexible (127) du sac à fumier (105, 205), dans lequel facultativement:
- le sac à fumier (105, 205) est agencé sur un élément de construction du dispositif de réservoir à fumier (100, 200, 300) et le squelette rétractable et extensible (109) comprend un nombre de segments de squelette (111, 113, 115, 117) qui au niveau d'une extrémité pivotante (111a, 113a, 115a, 117a) de ceux-ci sont agencés de façon pivotante sur l'élément de construction concerné le long de la périphérie du sac à fumier (105, 205), dans lequel chaque segment de squelette (111, 113, 115, 117) est facultativement accouplé au niveau d'une extrémité libre (111b, 113b, 115b, 117b) de celui-ci se trouvant opposée à l'extrémité pivotante (111a, 113a, 115a, 117a) à au moins l'un des autres segments de squelette (111, 113, 115, 117), en particulier accouplé à l'extrémité libre (111b, 113b, 115b, 117b) de l'au moins un autre segment de squelette (111, 113, 115, 117), dans lequel facultativement:
- deux segments de squelette (111, 113, 115, 117) mutuellement opposés sont accouplés dans chaque cas, et/ou
- l'accouplement est réalisé au moyen d'éléments d'accouplement, en particulier des tiges d'accouplement, dans lequel les éléments d'accouplement sont de préférence reliés mutuellement pour former une construction d'accouplement (121) qui relie les extrémités libres (111b, 113b, 115b, 117b) des segments de squelette (111, 113, 115, 117) les unes aux autres, et/ou
- le squelette (109) peut être rétracté et étendu au moyen d'un ou plusieurs actionneurs, dans lequel au moins une portion de la paroi du sac à fumier (105, 205) est facultativement reliée au squelette (109).

6. Dispositif de réservoir à fumier mobile (100, 200, 300) selon l'une quelconque des revendications précédentes, dans lequel:
- le dispositif de réservoir à fumier (100, 200, 300) comprend également un réservoir à fumier fixe (103, 203), et/ou
- le réservoir à fumier expansible (105, 303) peut être amené dans un état expansé et un état non expansé, dans lequel les dimensions internes et externes du réservoir à fumier expansible (105, 303) dans l'état expansé sont supérieures aux dimensions internes et externes du réservoir à fumier expansible (105, 303) dans l'état non expansé, et/ou
- le réservoir à fumier expansible (105, 303) est conçu pour déjà contenir du fumier dans l'état non expansé de celui-ci.

7. Dispositif de réservoir à fumier mobile (100, 200, 300) selon l'une quelconque des revendications précédentes, dans lequel le réservoir à fumier expansible (105, 303) a une partie extensible et une partie fixe.

8. Dispositif de réservoir à fumier mobile selon l'une quelconque des revendications précédentes, dans lequel le réservoir à fumier expansible (105, 303) est agencé sur le réservoir à fumier fixe (103, 203), dans lequel facultativement:
- une paroi du réservoir à fumier expansible (105, 303) est agencée contre une paroi du réservoir à fumier fixe (103, 203), et/ou
- le réservoir à fumier expansible (105, 303) et le réservoir à fumier fixe (103, 203) partagent une paroi, et/ou
- le réservoir à fumier expansible (105, 303) est agencé en haut du réservoir à fumier fixe (103, 203).

9. Dispositif de réservoir à fumier mobile (100, 200, 300) selon la revendication 8, dans lequel
- l'espace interne (131) du réservoir à fumier fixe (103, 203) et l'espace interne du réservoir à fumier expansible (105, 303) sont reliés l'un à l'autre pour permettre un passage de liquide à l'aide de moyens de raccordement facultativement refermables, et/ou
- l'espace interne du réservoir à fumier fixe (103, 203) est relié à l'espace interne du réservoir à fumier expansible (105, 303), dans lequel l'espace interne du réservoir à fumier fixe (103, 203) est facultativement relié à l'espace interne (309) du réservoir à fumier expansible (105, 303) au moyen d'une ouverture de passage (122, 124, 135) dans les parois qui sont agencées l'une contre l'autre ou la paroi partagée du réservoir à fumier fixe (103, 203) et du réservoir à fumier expansible (105, 303).

10. Dispositif de réservoir à fumier mobile (100, 200, 300) selon l'une quelconque des revendications précédentes, comprenant également un châssis mobile (7) sur lequel le réservoir à fumier expansible (105, 303) et, le cas échéant, le réservoir à fumier fixe (103, 203) sont agencés, dans lequel le châssis mobile (7) est conçu en tant que châssis mobile (7) à conduite autonome.

11. Dispositif mobile de fumure (1), comprenant un dispositif de réservoir à fumier mobile (100, 200, 300) selon l'une quelconque des revendications précédentes et un dispositif de fumure (5) conçu pour être alimenté en fumier à partir d'un réservoir à fumier du dispositif de réservoir à fumier mobile (100, 200, 300).

12. Dispositif mobile de fumure (1) selon la revendication 11, comprenant un bras de fumure (15, 17) rétractable et extensible qui peut être déplacé entre un état étendu et un état rétracté, dans lequel dans l'état étendu le bras de fumure (15, 17) s'étend de manière sensiblement transversale à l'axe longitudinal central (13) du dispositif mobile de fumure (1) et dans l'état rétracté le bras de fumure (15, 17) s'étend sensiblement parallèle à l'axe longitudinal central (13) du dispositif mobile de fumure (1).

13. Dispositif mobile de fumure (1) selon la revendication 12, dans lequel le bras de fumure (15, 17) comprend une pluralité de segments qui sont reliés de façon pivotante les uns aux autres, et qui dans l'état étendu du bras de fumure (15, 17) s'étendent de manière sensiblement mutuelle en ligne et qui dans l'état rétracté du bras de fumure (15, 17) s'étendent sensiblement parallèles les uns aux autres.

14. Dispositif mobile de fumure (1) selon la revendication 12 ou 13, dans lequel le dispositif de réservoir à fumier (100, 200, 300) comprend un réservoir à fumier fixe (103, 203) et un réservoir à fumier expansible (105, 303), dans lequel le réservoir à fumier expansible (105, 303) est agencé en haut du réservoir à fumier fixe (103, 203), et dans lequel le bras de fumure (15, 17) rétractable et extensible s'étend dans l'état rétracté de celui-ci le long du réservoir à fumier fixe (103, 203).
